# EUROPÄISCHE PATENTSCHRIFT

(11) **EP 3 127 828 B1**
(45) Veröffentlichungstag und Bekanntmachung des Hinweises auf die Patenterteilung: **02.05.2018**
(21) Anmeldenummer: 16182910.6
(22) Anmeldetag: 05.08.2016
(51) Int. Cl.: B65D 6/34

(54) **STECKVERBINDUNGSELEMENT UND TRANSPORTKISTE MIT STECKVERBINDUNGSELEMENTEN**
PLUG-IN CONNECTOR ELEMENT AND TRANSPORT BOX HAVING PLUG-IN CONNECTOR ELEMENTS
ÉLEMENT DE RACCORDEMENT ELECTRIQUE ET CAISSE DE TRANSPORT CONTENANT DES ELEMENTS DE RACCORDEMENT ELECTRIQUES

(30) Priorität: 07.08.2015 DE 202015104154 U
(43) Veröffentlichungstag der Anmeldung: 08.02.2017
(73) Patentinhaber: Hiller Technologie GmbH, 71093 Weil im Schönbuch (DE)
(72) Erfinder: Hiller, Axel, 71093 Weil im Schönbuch (DE)
(74) Vertreter: Mammel und Maser

(56) Entgegenhaltungen:
- US-A- 1 031 691
- US-A- 2 262 730
- US-A- 5 431 336
- US-A1- 2011 220 544
- US-A1- 2014 290 136

## Beschreibung

Die Erfindung betrifft ein Steckverbindungselement zum lösbaren Verbinden von zwei benachbarten Wandelementen, insbesondere für eine Transportkiste, sowie eine Transportkiste, welche aus einem Palettenboden, Wandelementen und einem Deckel besteht, welche durch solche Steckverbindungselemente miteinander verbunden sind.

Aus der US 2014/0290136 A1 ist ein Steckverbindungselement zum lösbaren Verbinden von zwei benachbarten Wandelementen bekannt. Dieses Steckverbindungselement umfasst eine erste U-förmige Aufnahme sowie eine zweite U-förmige Aufnahme, die durch ein Biegegelenk miteinander verbunden sind, so dass diese in einem 90°-Winkel zueinander anordenbar sind.

Aus der US 1,031,691 A ist ein Steckverbindungselement bekannt, welches einen ersten und zweiten U-förmigen Schenkel aufweist. Aufgrund einer Biegekante in einer gemeinsamen Wand des ersten und zweiten U-förmigen Schenkels ist ermöglicht, dass der erste und zweite U-Schenkel in einem rechten Winkel zueinander anordenbar sind.

Aus der DE 20 2004 010 560 U1 geht ein Steckverbindungselement hervor, welches aus einer Basisplatte besteht, an der eine U-förmige Aufnahme ausgebildet ist, wobei die U-förmige Aufnahme in einem rechten Winkel verläuft. Die U-förmige Aufnahme dient zur Aufnahme von zwei benachbarten senkrecht zueinander ausgerichteten Wandelementen. Zur Fixierung des Steckverbindungselements sind in der Basisplatte Befestigungsbohrungen vorgesehen, um Nägel oder Bolzen einzubringen.

Aus der DE 20 2007 003 048 U1 ist des Weiteren ein Steckverbindungselement zum lösbaren Verbinden von zwei benachbarten Wandelementen einer Transportkiste bekannt, welches eine U-förmige Aufnahme aufweist, die über Eck verläuft. Der Innenschenkel ist dabei länger ausgebildet als der äußere Schenkel. Zwischen dem inneren und äußeren Schenkel erstreckt sich quer zur Längserstreckung der U-förmigen Aufnahme eine Schneideinrichtung, welche beim Aufsetzen des Steckverbindungselements in einen äußeren Rand des Wandelements eindringt und somit in horizontaler Richtung eine Fixierung des Wandelements zum Steckverbindungselement ermöglicht.

Die vorgenannten Steckverbindungselemente sind im Einsatz ausschließlich für eine 90° Eckanordnung von Wandelementen beschränkt.

Der Erfindung liegt die Aufgabe zugrunde, ein Steckverbindungselement zu schaffen, welches im Einsatz flexibel ist und verschiedene Winkelpositionen von Wandelementen, insbesondere zur Bildung einer Transportkiste, ermöglicht sowie eine Transportkiste zu schaffen, welche eine Positionierung von Wandelementen für verschiedene Geometrien von Transportkisten ermöglicht.

Diese Aufgabe wird durch ein Steckverbindungselement gelöst, bei welchem eine erste U-förmige Aufnahme und eine zweite U-förmige Aufnahme gleich ausgerichtet und mit einem Biegegelenk miteinander verbunden sind, so dass die erste U-förmige Aufnahme und zweite U-förmige Aufnahme in deren Winkelposition zueinander veränderbar oder faltbar sind. Durch ein solches Steckverbindungselement kann sowohl ein Eckverbindungselement mit einem Winkel von 90° als auch ein Längsverbindungselement geschaffen werden, bei dem die erste und zweite U-förmige Aufnahme in einem Winkel von 180° zueinander - also fluchtend - ausgerichtet sind. Ebenso kann die erste und zweite Aufnahme in einem dazwischen liegenden Winkel angeordnet werden, wie beispielsweise zur Bildung einer sechseckigen oder achteckigen Behälterwand einer Transportkiste. Das Biegegelenk des Steckverbindungselements ist durch eine oder mehrere in einer Linie ausgerichtete Ausnehmungen gebildet, die sich senkrecht zur Basisplatte der ersten und zweiten Ausnehmung erstrecken und somit eine Biegelinie zwischen den benachbarten Innen- oder Außenschenkeln bildet. Durch das Biegegelenk zwischen dem ersten und zweiten Aufnahmeabschnitt ist eine flexible Anpassung und Einnahme von unterschiedlichen Winkelpositionen ermöglicht, um zwei benachbarte Wandelemente formfest zueinander zu positionieren und lösbar zueinander zu verbinden. Solche Steckverbindungselemente können auch zum Aufbau von Regalen, Lagerplätzen oder dergleichen eingesetzt werden.

Bevorzugt ist das Biegegelenk zwischen zwei benachbarten Innen- oder Außenschenkeln der ersten oder zweiten Aufnahme vorgesehen. Sofern das Biegegelenk zwischen zwei Außenschenkeln der ersten und zweiten U-förmigen Aufnahme gebildet ist, kann eine stabile Außenecke geschaffen werden. Die aufeinander zugerichteten Innenschenkel der ersten und zweiten Aufnahme sind getrennt voneinander und insbesondere verkürzt ausgebildet, so dass beim Überführen des Steckverbindungselementes aus einer Ausgangsposition, bei der beispielsweise die erste und zweite Aufnahme mit einem Winkel von 180° beziehungsweise fluchtend ausgerichtet sind, in eine 90° Eckanordnung die Innenschenkel aufeinander zugeschwenkt werden können und die Schwenkbewegung nicht behindern. Analoges gilt bei einer vertauschten Anordnung.

Eine bevorzugte Ausführungsform des Steckverbindungselementes sieht vor, dass die benachbarten Innen- oder Außenschenkel der ersten und zweiten Aufnahme und das Biegegelenk aus einem gemeinsamen Wandelement ausgebildet sind. Dadurch ist das Biegegelenk und benachbarte Innen- oder Außenschenkel einteilig ausgebildet, wodurch eine vereinfachte Herstellung ermöglicht ist. Zudem kann sich das Biegegelenk, welches auch einen Faltabschnitt zwischen den benachbarten Innen- oder Außenschenkeln bildet, über die gesamte Höhe oder auch nur teilweise erstrecken.

Des Weiteren ist an der Basisplatte bevorzugt zumindest ein Fixierdorn ausgebildet, der quer zur Erstreckungsrichtung der U-förmigen Aufnahme in die U-förmige Aufnahme ragt und vorzugsweise keilförmig ausgebildet ist. Dadurch kann ein einfaches Eintreiben des Fixierdornes in eine Stirnseite eines Wandelements und somit eine Vorfixierung des Wandelements zum Steckverbindungselement ermöglicht sein. Insbesondere kann diese Fixierung mit der Hand und gegebenenfalls durch Unterstützung von ein oder zwei Hammerschlägen erfolgen. An dem Fixierdorn ist bevorzugt eine Längssicke zur Aussteifung des Fixierdorns vorgesehen.

Die Fixierdorne sind bevorzugt jeweils am äußeren Ende an jeder Basisplatte des Steckverbindungselements vorgesehen. Danach kann auch bei beschädigten Ecken der Wandelemente ein sicheres Greifen möglich sein.

Des Weiteren ist bevorzugt zumindest an der Basisplatte eine Horizontalsperre angeordnet, welche sich quer zur Erstreckungsrichtung und in die U-förmige Aufnahme erstreckt. Diese Horizontalsperre ist vorteilhafterweise zum Fixierdorn beabstandet und weist insbesondere eine geringere Eintauchtiefe als der Fixierdorn auf. Die Horizontalsperre kann als umgebogene Lasche ausgebildet sein. Dadurch kann eine zusätzliche Stabilität und Belastbarkeit durch die zusätzliche Verkrallung der Horizontalsperre mit dem in der U-förmigen Aufnahme angeordneten Randbereich des Wandelements erfolgen.

Das Steckverbindungselement weist gemäß einer weiteren bevorzugten Ausführungsform an der Basisplatte einen Anschlagsteg auf, der sich in entgegengesetzter Richtung zum Außenschenkel der U-förmigen Aufnahme erstreckt. Diese Anschlagstege greifen an einer Außenseite des Palettenbodens oder des Deckels einer Transportkiste an, fixieren somit einerseits eine umlaufende Behälterwand aus mehreren Wandelementen zum Boden der Transportkiste und ermöglichen andererseits eine lagegesicherte Aufnahme für den Deckel. Bevorzugt sind die Auflagestege an dessen Längserstreckung mit einer Versteifungssicke ausgebildet. Dadurch kann wiederum die Belastbarkeit einer solchen Transportkiste, die mit solchen Steckverbindungselementen zusammengesetzt ist, erhöht sein.

Des Weiteren kann bevorzugt an dem Innenschenkel, Außenschenkel, der Basisplatte und/oder an dem Anschlagsteg zumindest eine Befestigungsbohrung vorgesehen sein. Dadurch können Nägel oder Bolzen zusätzlich zur Fixierung des Steckverbindungselements an dem oder den Wandelementen ermöglicht werden. Bevorzugt ist an dem Innen- und Außenschenkel jeweils eine Befestigungsbohrung vorgesehen, die mit einander fluchten, so dass eine zusätzliche Verbolzung des Steckverbindungselementes mit dem Wandelement ermöglicht ist.

Eine weitere bevorzugte Ausgestaltung des Steckverbindungselements sieht vor, dass die erste und zweite Aufnahme sowie das Biegegelenk aus einem plattenförmigen Material bestehen und bevorzugt als Stanz-Biegeteil oder Laser-Biegeteil hergestellt sind. Dies ermöglicht die einteilige Ausbildung eines Steckverbindungselementes in kostengünstiger Weise. Bevorzugt wird das Steckverbindungselement aus einem Blech, insbesondere verzinkten Blech, hergestellt.

Eine weitere vorteilhafte Ausgestaltung des Steckverbindungselements sieht an den freien Enden der Innenschenkel oder Außenschenkel der ersten und zweiten U-förmigen Aufnahme eine Abkantung vor, welche sich gegenüber der U-förmigen Aufnahme nach außen erstreckt. Dies ermöglicht ein vereinfachtes Aufsetzen des Steckverbindungselements auf die Stirnseiten der Wandelemente. Des Weiteren ist durch die Abkantung durch einen leichten Hammerschlag darauf ein Lösen des Steckverbindungselementes von dem Wandelement ermöglicht. Zudem weisen diese Abkantungen den Vorteil auf, dass diese die Innen- als auch Außenschenkel des Steckverbindungselementes aussteifen.

Die erste und zweite Aufnahme des Steckverbindungselements sind bevorzugt in einer Ausgangsposition zueinander fluchtend ausgerichtet. Dies bedeutet, dass die erste und zweite Aufnahme in einer Reihe hintereinander positioniert und durch das Biegegelenk miteinander verbunden sind. Eine solche Ausgangsposition vereinfacht die Herstellung des Steckverbindungselements sowie eine Reduzierung des Abfallmaterials und ermöglicht auch, dass das Steckverbindungselement von dieser Ausgangsposition verschiedene Winkelpositionen bis zu einer 90° Ecke einnehmen kann.

An den aufeinander zuweisenden Endbereichen der ersten und zweiten Basisplatte sind bevorzugt Verrastelemente vorgesehen, die beim Überführen der ersten und zweiten Aufnahme in eine Winkelposition, insbesondere in eine Winkelposition von 90°, verrastend ineinandergreifen. Dadurch kann die 90° Eckanordnung des Steckverbindungselementes zusätzlich gesichert werden. Bei den Verrastelementen kann es sich beispielsweise um eine Ausnehmung und eine Lasche handeln, die ineinandergreifen.

Eine weitere bevorzugte Ausführungsform des Steckverbindungselementes sieht vor, dass an einer Außenseite der ersten oder zweiten U-förmigen Aufnahme, insbesondere an der Basisplatte, ein U-förmiger Profilabschnitt vorgesehen ist, der vorzugsweise bezüglich der Einsteckrichtung eines Wandelementes um 90° der ersten oder zweiten U-förmigen Aufnahme getrennt angeordnet ist. Dabei ist bevorzugt vorgesehen, dass ein Innen- oder Außenschenkel des U-förmigen Profilabschnitts an der Basisplatte befestigt ist. Bevorzugt stützt sich dieser U-förmige Profilabschnitt mit einem Rücken an dem Anschlagsteg ab. Dies weist den Vorteil auf, dass eine höhere Versteifigkeit gegeben ist. Dieses Steckverbindungselement kann eine Befestigungsmöglichkeit an Paletten ermöglichen, bei denen keine Schraub- oder Nagelverbindung möglich ist. Bevorzugt weist der U-förmige Profilabschnitt innenliegend Widerhaken auf, die entgegen der Aufsteckrichtung wirken.

Die der Erfindung zugrunde liegende Aufgabe wird des Weiteren durch eine Transportkiste mit einem Palettenboden, mit mehreren Wandelementen und einem Deckel gelöst, bei der an oberen und unteren Eckbereichen von zwei benachbarten Wandelementen ein Steckverbindungselement nach einem der vorbeschriebenen Ausführungsformen positioniert und fixiert ist. Durch die klemmende Anordnung des Steckverbindungselementes aufgrund der Innen- und Außenschenkel auf den Wandelementen als auch durch das Eintreiben des Fixierdornes in die Stirnseite des Wandelements kann eine Transportkiste geschaffen werden, welche werkzeuglos oder nahezu werkzeuglos aufgebaut und wieder zerlegt werden kann, wobei alle Teile der Verpackung wiederverwendbar sind. Dies gilt sowohl für die Steckverbindungselemente als auch den Palettenboden, die Wandelemente und den Deckel. Zusätzlich kann die Aufbauzeit deutlich reduziert werden. Des Weiteren wird eine Verringerung der Herstellkosten ermöglicht, da für die Wandelemente handelsübliche Plattenmaterialien eingesetzt werden können. Zusätzliche Bearbeitungen der Wandelemente, wie beispielsweise durch Fräs-, Bohr- oder Nutenprofile, können entfallen.

Zumindest die Wandelemente der Transportkiste sind bevorzugt aus Holz, Pressholz, aus Kartonage oder Kunststoffplatten, insbesondere Hohlkammerprofile oder geschäumte Kunststoffplatten, hergestellt. Dadurch können kostengünstige Materialien für die Behälterwand eingesetzt werden. Bevorzugt wird die Transportkiste aus einem einheitlichen Material ausgebildet, wie beispielsweise aus Holz, wodurch dann auch ein sortenreines Recycling möglich ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine erste perspektivische Ansicht auf ein erfindungsgemäßes Steckverbindungselement,
Figur 2 eine weitere perspektivische Ansicht des Steckverbindungselements gemäß Figur 1,
Figur 3 eine schematische Ansicht von oben auf das Steckverbindungselement gemäß Figur 1,
Figur 4 eine perspektivische Ansicht des Steckverbindungselements gemäß Figur 1 in einer 90° Eckanordnung,
Figur 5 eine weitere perspektivische Ansicht des Steckverbindungselements gemäß Figur 4,
Figur 6 eine schematische Ansicht auf ein plattenförmiges Material vor einem Biegeprozess in einem Endformat gemäß Figur 1,
Figur 7 eine perspektivische Ansicht einer Transportkiste mit Steckverbindungselementen gemäß den Figuren 1 und 4,
Figur 8 eine schematische Ansicht auf eine alternative Ausführungsform des Steckverbindungselementes gemäß Figur 1 und
Figur 9 eine schematische Seitenansicht einer weiteren alternativen Ausführungsform des Steckverbindungselementes gemäß Figur 1.

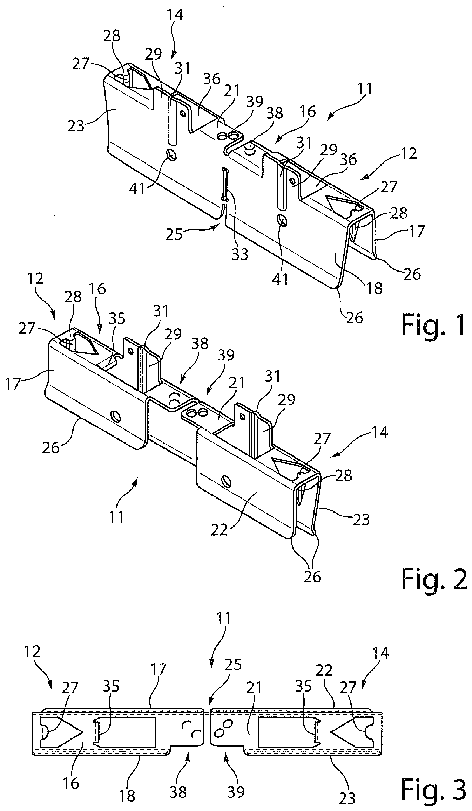

In Figur 1 ist eine perspektivische Ansicht auf eine Außenseite eines Steckverbindungselements 11 und in Figur 2 auf eine Innenseite des Steckverbindungselements 11 dargestellt. Die Figur 3 zeigt eine Ansicht von oben auf das Steckverbindungselement 11 gemäß Figur 1.

Dieses Steckverbindungselement 11 umfasst eine erste Aufnahme 12 und eine zweite Aufnahme 14, welche U-förmig ausgebildet sind. Hierzu umfasst die erste Aufnahme 12 eine erste Basisplatte 16, zu der abgewinkelt ein Innenschenkel 17 und Außenschenkel 18 angrenzen und die erste U-förmige Aufnahme 12 bilden. Die zweite Aufnahme 14 ist analog ausgebildet und umfasst eine zweite Basisplatte 21 sowie einen dazu abgewinkelten Innenschenkel 22 und Außenschenkel 23, durch welche die zweite U-förmige Aufnahme 14 gebildet ist.

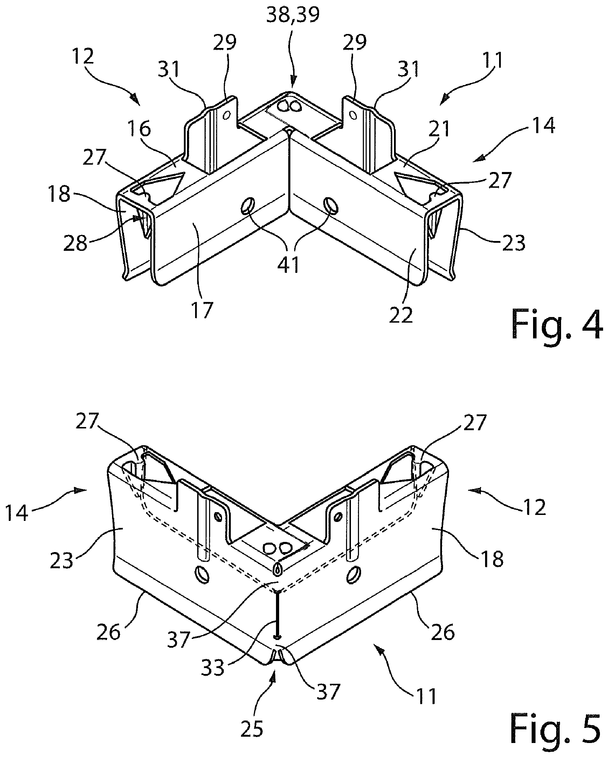

Die erste und zweite Aufnahme 12, 14 sind durch ein Biegegelenk 25 miteinander verbunden, wobei durch dieses Biegegelenk 25 die erste und zweite Aufnahme 12, 14 fluchtend zueinander beziehungsweise in einem Winkel von 180° zueinander ausgerichtet sind. Bevorzugt ist das Biegegelenk 25 an dem Außenschenkel 18 der ersten Aufnahme 12 und dem Außenschenkel 23 der zweiten Aufnahme 14 vorgesehen, so dass die erste und zweite Aufnahme 12, 14 um eine sich entlang des Biegegelenks 25 erstreckende Achse schwenkbar ist. Da die Basisplatten 16, 21 horizontal ausgerichtet sind, ist die Schwenkachse des Biegegelenkes 25 senkrecht dazu ausgerichtet, so dass die erste und zweite Aufnahme 12, 14 um eine vertikale Achse schwenkbar angeordnet sind. Beispielsweise ist eine Ausrichtung der ersten und zwei weiteren Aufnahmen 12, 14 in einer 90° Anordnung als Eckverbindung möglich, wie dies in den Figuren 4 und 5 dargestellt ist, auf welche nachfolgend noch näher eingegangen wird.

An dem Innen- und/oder Außenschenkel 17, 18, 22, 23 der ersten und/oder zweiten Aufnahme 12, 14 ist bevorzugt eine Abkantung 26 vorgesehen, welche gegenüber der U-förmigen Aufnahme 12, 14 nach außen ragt. Dadurch kann ein erleichtertes Aufsetzen des Steckverbindungselements 11 auf ein Wandelement zur Positionierung in der ersten Aufnahme 12 oder zweiten Aufnahme 14 ermöglicht sein. Der Innenschenkel 17 und Außenschenkel 18 sind bevorzugt bezüglich deren freien Enden geringfügig aufeinander zugerichtet vorgesehen, das heißt, dass der Abstand zwischen dem Innenschenkel 17 und Außenschenkel 18 unmittelbar vor der beginnenden Abkantung 26 geringer als die Breite der Basisplatte 16, 21 ist. Dadurch kann nach dem Einführen eines Wandelements in die U-förmige Aufnahme 12,14 durch den Innen- und Außenschenkel 17, 22; 18, 23 eine Klemmkraft auf das Wandelement zur Vorfixierung aufgebracht werden.

Die erste und zweite Basisplatte 16, 21 weisen jeweils einen Fixierdorn 28 auf, der in die U-förmige Aufnahme 12, 14 ragt. Dieser ist vorzugsweise keilförmig ausgerichtet, wobei deren Spitze in die U-förmige Aufnahme 12, 14 ragt, um ein einfaches Fixieren des Steckverbindungselements 11 durch Eindringen des Fixierdorns 28 in die Stirnseite des Wandelements zu ermöglichen. Die Fixierdorne 28 sind jeweils am äußeren Ende der ersten und zweiten Aufnahme 12, 14 angeordnet, so dass auch bei beschädigten Eckbereichen von Wandelementen eine sichere und lösbare Verbindung von zwei benachbarten Wandelementen durch das Steckverbindungselement 11 ermöglicht ist. Dieser Fixierdorn 28 kann durch Umbiegen eines Abschnitts der Basisplatte 16, 21 in einfacher Weise gebildet sein. Bevorzugt umfasst der Fixierdorn 28 eine Längssicke 27, die sich insbesondere von der Abkantung bis zur Spitze erstreckt.

In der Ebene des Außenschenkels 18, 23 verläuft ein Anschlagsteg 29, der sich in entgegengesetzter Richtung zum Außenschenkel 18, 23 gegenüber der Basisplatte 16, 21 erstreckt. Dieser Anschlagsteg 29 dient zur seitlichen Fixierung des Steckverbindungselementes 11 auf einem Boden und/oder zur seitlichen Fixierung eines auf der Basisplatte des Steckverbindungselements 11 aufgelegten Deckels. Bevorzugt umfasst der Anschlagsteg 29 eine Sicke 31 zu dessen Aussteifung, welche sich bevorzugt bis in den Außenschenkel 18, 23 hinein erstreckt.

Da der Anschlagsteg 29 eine Teilfläche der Basisplatte 16, 21 bildet und gegenüber dieser nach oben gebogen ist, bildet sich in der ersten und zweiten Basisplatte 16, 21 eine Ausnehmung 36. An der Ausnehmung 36 ist eine Horizontalsperre 35 vorgesehen, welche wiederum in die U-förmige Aufnahme 12, 14 ragt. Hierbei handelt es sich um eine Abkantung zur Bildung einer Lasche, die bevorzugt kürzer ausgebildet ist als der Fixierdorn 28. Diese kann ebenfalls keilförmig ausgebildet sein. Es genügt aber auch eine horizontal ausgerichtete Stirnfläche. Diese Horizontalsperre 35 greift beim vollständigen Aufliegen der ersten und zweiten Basisplatte 16, 21 ebenfalls an der Stirnseite des umgriffenen Wandelements an und verhindert ein horizontales Herauslösen des Steckverbindungselements 11 von dem Wandelement.

Das Biegegelenk 25 ist bevorzugt durch eine oder mehrere Ausnehmungen 33 oder Schlitze oder randoffene Schlitze gebildet, so dass ein oder mehrere Stege 37 zwischen den Außenschenkeln 18, 23 verbleiben, die in einfacher Weise eine Faltung des Steckverbindungselements 11 ermöglichen.

Die Innenschenkel 17, 22 sind in Richtung auf das Biegegelenk 25 weisend verkürzt ausgebildet, so dass ein Freiraum zur Einnahme einer 90° Position der ersten Aufnahme 12 zur zweiten Aufnahme 14 ermöglicht ist, wobei in der 90° Anordnung die benachbarten Stirnseiten der Innenschenkel 17, 22 aneinander angrenzen oder aneinander anliegen können, wie dies in Figur 4 dargestellt ist.

Zum Aufrechterhalten dieser 90° Anordnung gemäß den Figuren 4 und 5 des Steckverbindungselements 11 können im aufeinander zuweisenden Endbereich der ersten Basisplatte 16 und zweiten Basisplatte 21 Verrastelemente 38, 39 vorgesehen sein, die nach dem Überführen der ersten Aufnahme 12 und zweiten Aufnahme 14 in die 90° Eckanordnung ineinander greifen und diese Position sichern. Beispielsweise kann das Verrastelement 38 als Lasche oder Hakenelement und das Verrastelement 39 als Ausnehmung oder Durchbrechung ausgebildet sein, die dann verrastend ineinander greifen.

Zur zusätzlichen Befestigung und Sicherung des Steckverbindungselements 11 an den Wandelementen können Durchgangsbohrungen 41 vorgesehen sein, welche das Einbringen von Nägeln oder Bolzen ermöglichen. Diese Durchgangsbohrungen können an den Innenschenkeln 17, 22 und/oder Außenschenkeln 18, 23, den Basisplatten 16, 21 und/oder den Anschlagstegen 29 vorgesehen sein.

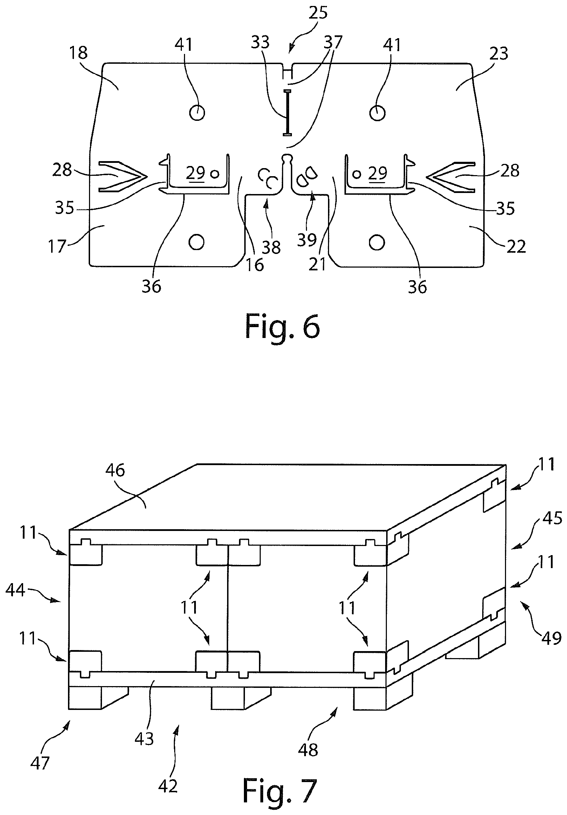

In Figur 6 ist eine schematische Ansicht auf einen Arbeitsschritt zur Herstellung des Steckverbindungselements 11 als Stanz-Biegeteil oder Laser-Biegeteil dargestellt. Bevorzugt wird dieses Steckverbindungselement 11 in mehreren Stanz- oder Laserschneid- und Biegeschritten hergestellt. Bevorzugt wird ein plattenförmiges Rohmaterial, insbesondere eine Blechtafel, in die in Figur 6 dargestellte Form ausgestanzt oder ausgelasert. Dabei ist zu erkennen, dass bereits das Biegegelenk 25 oder die Stege 37 zwischen den Wandabschnitten zur Bildung der ersten und zweiten Aufnahme 12, 14 ausgebildet sind. Zur Bildung der ersten und zweiten Aufnahme 12, 14 sind bereits die Fixierdorne 28, die Anschlagstege 29 als auch die Horizontalsperre 35 ausgestanzt. Ebenso sind die Verrastelemente 38, 39 ausgestanzt. Anschließend erfolgt ein Biegeprozess, um die U-förmige erste und zweite Aufnahme 12, 14 sowie die Abkantung 26 auszubilden als auch den Fixierdorn 12 und die Horizontalsperre 35 nach innen weisend und den Anschlagsteg 29 nach außen weisend gegenüber der Basisplatte 16, 21 zu formen.

In Figur 7 ist eine perspektivische Ansicht einer Transportkiste 42 dargestellt. Diese Transportkiste 42 besteht aus einem Palettenboden 43, mehreren Wandelementen 44, 45 und einem Deckel 46, welche über Steckverbindungselemente 11 lösbar und formfest miteinander verbunden sind. Die Steckverbindungselemente sind als Eckverbinder gemäß den Figuren 4 und 5 ausgebildet. Zum Aufbau der Transportkiste 42 wird beispielsweise auf das Wandelement 44 in zwei unteren Eckbereichen 47, 48 jeweils ein Steckverbindungselement 11 aufgebracht und darauffolgend im Eckbereich 48 das Wandelement 45 positioniert. Im weiteren Eckbereich 49 des Wandelements 45 wird ebenfalls das Steckverbindungselement 11 aufgebracht, so dass darauffolgend zwei um 90° zueinander angeordnete Wandelemente 44, 45 auf den Palettenboden 43 aufgestellt werden können. Nach dem Positionieren des Wandelements 44, 45 zueinander kann im oberen Eckbereich bereits ein Steckverbindungselement 11 zur sicheren Anordnung der beiden Wandelemente 44, 45 zueinander erfolgen. Darauffolgend kann ein Beladen der Transportkiste 42 erfolgen, sofern dies nicht bereits zuvor geschehen ist. Anschließend werden die weiteren Wandelemente in Analogie aufgebracht, um eine geschlossene Behälterwand der Transportkiste 42 zu bilden. Darauffolgend können die oberen Steckverbindungselemente aufgebracht werden. Anschließend wird der Deckel 46 aufgelegt, wobei dieser durch die Anschlagstege 29 in Position gehalten ist. Darauffolgend können der Palettenboden, die Wandelemente 44, 45 und der Deckel 46 durch Bänder zueinander fixiert werden. Alternativ können auch Nägel oder Bolzen zu deren Befestigung eingesetzt werden.

Sofern ein Wandelement 44, 45 aus zwei Plattenhälften ausgebildet ist, können diese fluchtend zueinander durch das Steckverbindungselement als Längsverbindungselement gemäß den Figuren 1 und 2 zueinander ausgerichtet und positioniert werden. Die vorstehenden Ausführungen gelten analog hierfür.

Die Transportkiste 42 besteht bevorzugt aus Holz, Pressholz, Kartonage, Kunststoff oder dergleichen. Alternativ können die Wandelemente aus Holz, Pressholz oder Kartonage und der Palettenboden und Deckel aus Kunststoff bestehen.

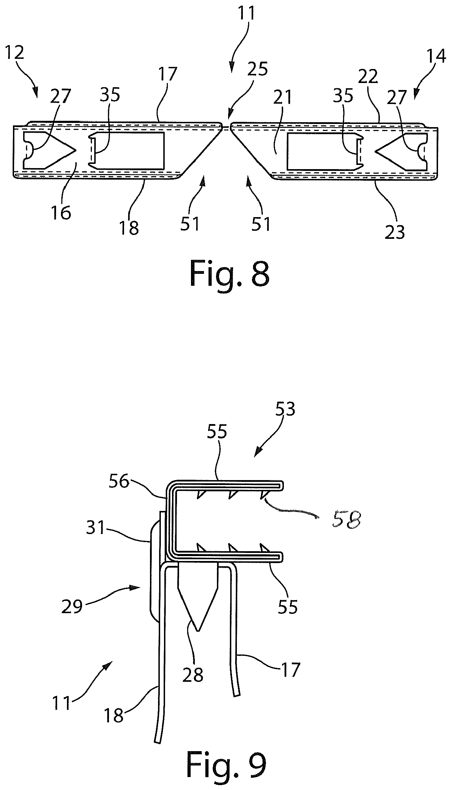

In Figur 8 ist eine schematische Ansicht von oben auf eine alternative Ausführungsform des Steckverbindungselementes 11 gemäß den Figuren 1 bis 5 dargestellt. Bei dieser Ausführungsform ist vorgesehen, dass anstelle der Rastelemente 38, 39 eine Freischneidung 51 vorgesehen ist. Diese ist vorzugsweise als eine Schräge von 45° am Innenschenkel ausgebildet. Dadurch wird ermöglicht, dass die beiden U-förmigen Aufnahmen 12 und 14 um 90° zueinander abgewinkelt werden können, wie dies in den Figuren 4 und 5 dargestellt ist, so dass die Schrägen der Freischneidungen 51 benachbart zueinander liegen.

In Figur 9 ist eine schematische Seitenansicht einer weiteren alternativen Ausführungsform des Steckverbindungselementes 11 dargestellt. Bei diesem Steckverbindungselement 11 ist vorgesehen, dass an einem der beiden Aufnahmen 12, 14 ein U-förmiger Profilabschnitt 53 angeordnet ist. Dieser U-förmige Profilabschnitt 53 weist zwei parallele Schenkel 55 auf, wobei einer der beiden Schenkel 55 an der Basisplatte 16 aufliegt. Ein Verbindungsabschnitt 56 zwischen den beiden Schenkeln 55 liegt bevorzugt an dem Anschlagsteg 29 an. Dieser U-förmige Profilabschnitt 53 erstreckt sich bevorzugt entlang der Länge eines Innenschenkels 17, 22 der Aufnahme 12, 14 oder ist dem gegenüber kürzer ausgebildet. In den Aufnahmebereich des U-förmigen Profilabschnitts 53 weisend sind Widerhaken 58 vorgesehen. Dieser U-förmige Profilabschnitt 53 kann durch eine Klebe-, Klemm-, Stanz- und/oder Schweißverbindung mit der ersten oder zweiten Aufnahme 12, 14 verbunden sein.

Durch ein solches Steckverbindungselement 11 wird ermöglicht, dass dieses beispielsweise mittels dem U-förmigen Profilabschnitt 53 am Randbereich des Palettenboden 43 aufgesteckt wird, so dass das Steckverbindungselement 11 eine Position wie in Figur 7 einnehmen kann. Dies kann insbesondere bei Palettenböden 43 vorgesehen sein, bei denen die Füße nicht bündig zum Eckbereich liegen sondern gegenüber dem Eckbereich nach innen versetzt oder seitlich zum Eckbereich versetzt sind. Nach dem Aufstecken des U-förmigen Profilabschnitts 53 können wiederum Wandelemente an dem Steckverbindungselement in die erste und zweite Aufnahme 12, 14 aufgesetzt und fixiert werden. Durch diese Ausführungsform des Steckverbindungselementes 11 ist die Möglichkeit der Befestigung an Paletten beziehungsweise Palettenboden gegeben, bei denen keine Schraub- oder Nagelverbindung möglich oder erwünscht ist.

## Patentansprüche

1. Steckverbindungselement zum lösbaren Verbinden von zwei benachbarten Wandelementen (44, 45), insbesondere für eine Transportkiste (42), mit einer ersten U-förmigen Aufnahme (12) für einen Randabschnitt des ersten Wandelements (44), welche aus einer ersten Basisplatte (16) und einem dazu abgewinkelten Innenschenkel (17) und sich daran anschließenden abgewinkelten Außenschenkel (18) gebildet ist und mit einer zweiten U-förmigen Aufnahme (14) für einen Randabschnitt des zweiten Wandelements (45), welcher aus einer zweiten Basisplatte (21) und einem dazu abgewinkelten Innenschenkel (22) und sich daran anschließenden abgewinkelten Außenschenkel (23) ausgebildet ist, wobei die erste und zweite U-förmige Aufnahme (12,14) gleich ausgerichtet sind und mit einem Biegegelenk (25) miteinander verbunden sind, so dass die U-förmigen Aufnahmen (12, 14) in deren Winkelposition zueinander einstellbar sind, **dadurch gekennzeichnet, dass** das Biegegelenk (25) durch ein oder mehrere in einer Reihe ausgerichtete Ausnehmungen (33) gebildet ist, welche sich senkrecht zur ersten Basisplatte (16) oder zweiten Basisplatte (21) erstrecken und eine Biegelinie zwischen den zwei benachbarten Innenschenkeln (17, 22) oder Außenschenkeln (18, 23) bilden.

2. Steckverbindungselement nach Anspruch 1, **dadurch gekennzeichnet, dass** das Biegegelenk (25) zwischen zwei benachbarten Innenschenkeln (17, 22) oder Außenschenkel (18, 24) der ersten U-förmigen Aufnahme (12) und zweiten U-förmigen Aufnahme (14) vorgesehen ist und vorzugsweise die benachbarten Innenschenkel (17, 22) oder Außenschenkel (18, 23) der ersten und zweiten Aufnahme (12, 14) und das Biegegelenk (25) in einem gemeinsamen Wandelement ausgebildet sind.

3. Steckverbindungselement nach einem der vorhergehenden Ansprüche, **dadurch gekennzeichnet, dass** an der Basisplatte (16, 21) zumindest ein Fixierdorn (28) ausgebildet ist, der quer zur Erstreckungsrichtung der U-förmigen Aufnahme (12, 14) in die U-förmige Aufnahme (12, 14) ragt und vorzugsweise keilförmig ausgebildet ist und insbesondere der Fixierdorn (28) eine Längssicke (27) aufweist.

4. Steckverbindungselement nach Anspruch 4, **dadurch gekennzeichnet, dass** jeweils vom äußeren Ende der ersten und zweiten Basisplatte (16, 21) ein Fixierdorn (28) vorgesehen ist.

5. Steckverbindungselement nach einem der vorhergehenden Ansprüche, **dadurch gekennzeichnet, dass** an der Basisplatte (16, 21) eine Horizontalsperre (35) vorgesehen ist, welche sich quer zur Erstreckungsrichtung der U-förmigen Aufnahme (12, 14) erstreckt und vorzugsweise eine geringere Eintauchtiefe als der Fixierdorn (28) aufweist.

6. Steckverbindungselement nach einem der vorhergehenden Ansprüche, **dadurch gekennzeichnet, dass** die erste und zweite Aufnahme (12, 14) einen Anschlagsteg (29) aufweisen, der sich in entgegengesetzter Richtung zum Außenschenkel (18, 23) gegenüber der Basisplatte (16, 21) erstreckt und vorzugsweise in Erstreckungsrichtung eine Versteifungssicke (31) aufweist.

7. Steckverbindungselement nach einem der vorhergehenden Ansprüche, **dadurch gekennzeichnet, dass** an zumindest einem Innenschenkel (17, 22), Außenschenkel (18, 23), der Basisplatte (16, 21) und/oder dem Anschlagsteg (29) zumindest eine Befestigungsbohrung vorgesehen ist, insbesondere, dass an dem Innen- und Außenschenkel (17, 18; 22, 23) eine fluchtende Befestigungsbohrung vorgesehen ist.

8. Steckverbindungselement nach einem der vorhergehenden Ansprüche, **dadurch gekennzeichnet, dass** die erste und zweite Aufnahme (12, 14) sowie das Biegegelenk (25) aus einem plattenförmigen Material bestehen und bevorzugt als Stanz-Biegeteil oder Laser-Biegeteil hergestellt sind.

9. Steckverbindungselement nach einem der vorhergehenden Ansprüche, **dadurch gekennzeichnet, dass** an dem freien Ende der Innenschenkel (17, 22) und/oder Außenschenkel (18, 23) eine Abkantung (26) vorgesehen ist, welche gegenüber der U-förmigen Aufnahme (12, 14) nach außen weist.

10. Steckverbindungselement nach einem der vorhergehenden Ansprüche, **dadurch gekennzeichnet, dass** die erste und zweite Aufnahme (12, 14) in einer Ausgangsposition fluchtend zueinander ausgerichtet sind.

11. Steckverbindungselement nach einem der vorhergehenden Ansprüche, **dadurch gekennzeichnet, dass** an aufeinander zuweisenden Endbereichen der ersten und zweiten Basisplatte (16, 21) Freischneidungen vorgesehen sind oder Verrastelemente (38, 39) vorgesehen sind, die beim Überführen der ersten und zweiten Aufnahme (12, 14) in eine Winkelposition, insbesondere in eine Winkelposition von 90°, verrastend ineinandergreifen.

12. Steckverbindungselement nach einem der vorhergehenden Ansprüche, **dadurch gekennzeichnet, dass** an einer Außenseite der ersten oder zweiten U-förmigen Aufnahme (12, 14), insbesondere an der Basisplatte (16) der ersten oder zweiten Aufnahme (12, 14) ein U-förmiger Profilabschnitt (53) angeordnet ist und vorzugsweise ein Innen- oder Außenschenkel (55) des U-förmigen Profilabschnitts (53) an der Basisplatte (16) der ersten oder zweiten Aufnahme (12, 14) befestigt ist.

13. Transportkiste mit einem Palettenboden (43), mit mehreren Wandelementen (44, 45) und einem Deckel (46), wobei die Wandelemente (44, 45) senkrecht zum Palettenboden (43) und Deckel (46) ausgerichtet sind, **dadurch gekennzeichnet, dass** an den oberen und unteren Eckbereichen von zwei benachbarten Wandelementen (44, 45) ein Steckverbindungselement (11) nach einem der vorhergehenden Ansprüche zum lösbaren Positionieren der Wandelemente (44, 45) zueinander vorgesehen ist.

14. Transportkiste nach Anspruch 13, **dadurch gekennzeichnet, dass** zumindest die Wandelemente (44, 45) aus Holz, Pressholz, aus Kartonage oder aus Kunststoff hergestellt sind.

## Claims

1. Plug connection element for releasable connecting two adjacent wall elements (44, 45), in particular for a transportation box (42), having a first U-shaped receptacle (12) for an edge region of the first wall element (44), which is formed from a first base plate (16) and an inner leg (17) angled to the latter and an adjoined angled outer leg (18), and a second U-shaped receptacle (14) for an edge region of the second wall element (45), which is formed from a second base plate (21) and an inner leg (22) angled to the latter and an adjoined angled outer leg (23), wherein the first and second U-shaped receptacle (12, 14) are identically aligned, and the first and second receptacle (12, 14) are connected to each other by means of a bending joint (25), so that the U-shaped receptacles (12, 14) is adjustable in terms of their angular position to each other, **characterized in that** the bending joint (25) is formed by virtue of one or more cutouts (33) aligned in a row, which extend perpendicular to the first base plate (16) or second base plate (21) and form a bending line between the two adjacent inner legs (17, 22) or outer legs (18, 23).

2. Plug connection element according to claim 1, **characterized in that** the bending joint (25) is provided between two adjacent inner legs (17, 22) or outer legs (18, 24) of the first U-shaped receptacle (12) and second U-shaped receptacle (14) and preferably the adjacent inner legs (17, 22) or outer legs (18, 23) of the first and second U-shaped receptacle (12, 14) and the bending joint (25) are formed in a common wall element.

3. Plug connection element according to one of the preceding claims, **characterized in that**, on the base plate (16, 21), at least one fixing pin (28) is formed that protrudes transversely to the direction of extension of the U-shaped receptacle (12, 14) into the U-shaped receptacle (12, 14) and is preferably formed in a wedge shape and in particular the fixing pin (28) has a longitudinal bead (27).

4. Plug connection element according to claim 4, **characterized in that** a fixing pin (28) is provided respectively from the outer edge of the first and second base plate (16, 21).

5. Plug connection element according to one of the preceding claims, **characterized in that**, on the base plate (16, 21), a horizontal block (35) is provided, which extends transversely to the direction of extension of the U-shaped receptacle (12, 14) and preferably has a lesser immersion depth than the fixing pin (28).

6. Plug connection element according to one of the preceding claims, **characterized in that** the first and second receptacle (12, 14) have a stop ridge (29), which extends in the opposite direction to the outer leg (18, 23) with respect to the base plate (16, 21) and preferably has a reinforcement bead (31).

7. Plug connection element according to one of the preceding claims, **characterized in that**, on at least one inner leg (17, 22), outer leg (18, 23), the base plate (16, 21) and/or the stop ridge (29), at least one fastening bore is provided, in particular that on the inner and outer leg (17, 18; 22, 23) an aligning fastening bore is provided.

8. Plug connection element according to one of the preceding claims, **characterized in that** the first and second receptacle (12, 14) and the bending joint (25) consist of a plate-shaped material and are preferably manufactured as a stamped-bent part or as a laser-bent part.

9. Plug connection element according to one of the preceding claims, **characterized in that**, at the free end of the inner leg (17, 22) and/or outer leg (18, 23), a fold (26) is provided, which points outward in relation to the U-shaped receptacle (12, 14).

10. Plug connection element according to one of the preceding claims, **characterized in that** the first and second receptacle (12, 14) are aligned in alignment towards each other.

11. Plug connection element according to one of the preceding claims, **characterized in that**, at end regions facing each other of the first and second base plate (16, 21), cutouts are provided or interlocking elements (38, 39) are provided, which, during the transition of the first and second receptacle (12, 14) into an angular position, in particular an angular position of 90°, interlockingly engage with each other.

12. Plug connection element according to one of the preceding claims, **characterized in that**, on one outer side of the first or second U-shaped receptacle (12, 14), in particular on the base plate (16) of the first or second U-shaped receptacle (12, 14), a U-shaped profile section (53) is arranged and preferably an inner or outer leg (55) of the U-shaped profile section (53) is fastened to the base plate (16) of the first or second receptacle (12, 14).

13. Transportation box having a pallet floor (43), with a plurality of wall elements (44, 45) and a lid (46), wherein the wall elements (44, 45) are aligned perpendicular to the pallet floor (43) and lid (46), **characterized in that**, at the upper and lower corner regions of adjacent wall elements (44, 45), a plug connection element (11) according to one of the preceding claims is provided for releasable positioning of the wall elements (44, 45) in relation to each other.

14. Transportation box according to Claim 14, **characterized in that** at least the wall elements (44, 45) are manufactured from wood, compressed wood, paperboard or plastic.

## Revendications

1. Élément d'assemblage par emboîtement destiné l'assemblage amovible de deux éléments de paroi (44, 45) voisins, en particulier pour une caisse de transport (42), ayant un premier dispositif de réception (12) en forme de U destiné à recevoir une partie périphérique du premier élément de paroi (44) et formé par une première plaque de base (16) et une branche intérieure (17) recourbée par rapport à celle-ci ainsi que par une branche extérieure recourbée (18) qui lui est contiguë, et ayant un deuxième dispositif de réception (14) en forme de U destiné à recevoir une partie périphérique du deuxième élément de paroi (45) et formé par une deuxième plaque de base (21) et une branche intérieure (22) recourbée par rapport à celle-ci ainsi que par une branche extérieure recourbée (23) qui lui est contiguë, le premier et le deuxième dispositif de réception (12, 14) en forme de U étant orientés de manière identique et étant reliés l'un à l'autre au moyen d'un joint flexible (25) de telle sorte que lesdits dispositifs de réception (12, 14) en forme de U peuvent être réglés l'un par rapport à l'autre selon une position angulaire donnée, **caractérisé en ce que** le joint flexible (25) est formé par un ou plusieurs évidements (33) alignés sur une même rangée, lesquels s'étendent perpendiculairement à la première plaque de base (16) ou à la deuxième plaque de base (21) et forment une ligne de flexion entre les deux branches intérieures (17, 22) voisines ou les deux branches extérieures (18, 23) voisines.

2. Élément d'assemblage par emboîtement selon la revendication 1, **caractérisé en ce que** le joint flexible (25) est prévu entre deux branches intérieures (17, 22) voisines ou deux branches extérieures (18, 24) voisines du premier dispositif de réception (12) en forme de U et du deuxième dispositif de réception (14) en forme de U, et **en ce que** de préférence les branches intérieures (17, 22) voisines ou les branches extérieures (18, 23) voisines du premier et du deuxième dispositif de réception (12, 14) ainsi que le joint flexible (25) sont formés dans un élément de paroi commun.

3. Élément d'assemblage par emboîtement selon l'une quelconque des revendications précédentes, **caractérisé en ce qu'**au moins une broche de fixation (28) est formée sur la plaque de base (16, 21) et s'étend dans le dispositif de réception (12, 14) en forme de U de manière perpendiculaire au sens d'extension dudit dispositif de réception (12, 14) en forme de U, et est formée de préférence en forme de coin, et **en ce que** de préférence ladite broche de fixation (28) présente une gorge longitudinale (27).

4. Élément d'assemblage par emboîtement selon la revendication 4, **caractérisé en ce qu'**il est prévu une broche de fixation (28) s'étendant respectivement à partir de l'extrémité extérieure de la première et de la deuxième plaque de base (16, 21).

5. Élément d'assemblage par emboîtement selon l'une quelconque des revendications précédentes, **caractérisé en ce que** sur la plaque de base (16, 21) est prévu un dispositif de blocage horizontal (35) qui s'étend perpendiculairement au sens d'extension du dispositif de réception (12, 14) en forme de U et présente de préférence une profondeur d'immersion plus faible que celle de la broche de fixation (28).

6. Élément d'assemblage par emboîtement selon l'une quelconque des revendications précédentes, **caractérisé en ce que** le premier et le deuxième dispositif de réception (12, 14) présentent une barrette de butée (29) qui s'étend dans le sens opposé à la branche extérieure (18, 23) par rapport à la plaque de base (16, 21) et qui présente, de préférence dans le sens d'extension, une gorge de renforcement (31).

7. Élément d'assemblage par emboîtement selon l'une quelconque des revendications précédentes, **caractérisé en ce qu'**au moins un trou de fixation est prévu sur au moins une branche intérieure (17, 22), une branche extérieure (18, 23), la plaque de base (16, 21) et/ou la barrette de butée (29), en particulier **en ce que** les trous de fixation prévus sur les branches intérieure et extérieure (17, 18; 22, 23) sont en alignement.

8. Élément d'assemblage par emboîtement selon l'une quelconque des revendications précédentes, **caractérisé en ce que** le premier et le deuxième dispositif de réception (12, 14) ainsi que le joint flexible (25) sont constitués par un matériau en plaque et sont fabriqués de préférence en tant que pièce découpée, mécaniquement ou au laser, et pliée.

9. Élément d'assemblage par emboîtement selon l'une quelconque des revendications précédentes, **caractérisé en ce qu'**à l'extrémité libre des branches intérieures (17, 22) et/ou des branches extérieures (18, 23) est prévu un bord recourbé (26) qui est tourné vers l'extérieur par rapport au dispositif de réception (12, 14) en forme de U.

10. Élément d'assemblage par emboîtement selon l'une quelconque des revendications précédentes, **caractérisé en ce que** le premier et le deuxième dispositif de réception (12, 14) sont, dans une position initiale, orientés l'un par rapport à l'autre de manière à être en alignement.

11. Élément d'assemblage par emboîtement selon l'une quelconque des revendications précédentes, **caractérisé en ce que** dans des zones terminales de la première et de la deuxième plaque de base (16, 21) qui se situent en regard l'une de l'autre sont prévues des découpes ou sont prévus des éléments d'enclenchement (38, 39) qui, lorsque le premier et le deuxième dispositif de réception (12, 14) sont placés dans une position angulaire, en particulier dans une position angulaire de 90°, s'engagent l'un dans l'autre par enclenchement.

12. Élément d'assemblage par emboîtement selon l'une quelconque des revendications précédentes, **caractérisé en ce qu'**une partie profilée (53) en forme de U est disposée sur une face extérieure du premier ou du deuxième dispositif de réception (12, 14) en forme de U, en particulier sur la plaque de base (16) du premier ou du deuxième dispositif de réception (12, 14), et **en ce que** de préférence une branche intérieure ou extérieure (55) de la partie profilée (53) en forme de U est fixée sur la plaque de base (16) du premier ou du deuxième dispositif de réception (12, 14).

13. Caisse de transport ayant un fond de palette (43), plusieurs éléments de paroi (44, 45) et un couvercle (46), les éléments de paroi (44, 45) étant orientés perpendiculairement au fond de palette (43) et au couvercle (46), **caractérisée en ce que** dans les zones d'angle supérieures et inférieures de deux éléments de paroi (44, 45) voisins est prévu un élément d'assemblage par emboîtement (11) selon l'une quelconque des revendications précédentes en vue de positionner de manière amovible les éléments de paroi (44, 45) entre eux.

14. Caisse de transport selon la revendication 13, **caractérisée en ce qu'**au moins les éléments de paroi (44, 45) sont fabriqués en bois, en bois comprimé, en carton ou en matière plastique.
